# NOUVEAU FASCICULE DE BREVET EUROPEEN

(11) **EP 0 266 261 B2**
(45) Date de publication et mention de la décision concernant l'opposition: **15.06.1994**
(45) Mention de la délivrance du brevet: 16.01.1991
(21) Numéro de dépôt: 87402323.7
(22) Date de dépôt: 16.10.1987
(51) Int. Cl.: F16D 55/224

(54) **Plaquette pour frein à disque et frein à disque équipé de telles plaquettes**
Bremsbelag für Scheibenbremse und mit solchen Belägen ausgerüstete Scheibenbremse
Brake pad for a disc brake, and disc brake fitted with such pads

(30) Priorité: 31.10.1986 FR 8615194
(43) Date de publication de la demande: 04.05.1988
(73) Titulaire: ALLIEDSIGNAL EUROPE SERVICES TECHNIQUES, 93700 Drancy (FR)
(72) Inventeur: Thioux, Alain, F-94430 Chennevières (FR)

(56) Documents cités:
- EP-A- 0 032 462
- EP-A- 0 204 604
- DE-A- 2 619 984
- DE-A- 3 139 942
- DE-U- 8 519 567
- FR-A- 2 296 129
- FR-A- 2 316 478
- FR-A- 2 415 234
- FR-A- 2 420 692
- FR-A- 2 553 165
- GB-A- 2 147 376

## Description

La présente invention est relative à une plaquette pour frein à disque et, plus particulièrement, à une telle plaquette équipée d'un organe à ressort anti-vibration. La présente invention est aussi relative à un frein à disque équipé de telles plaquettes.

Un frein à disque d'un type classique comprend un étrier placé à cheval sur le disque et des plaquettes de frein placées de part et d'autre du disque, dans cet étrier. Les plaquettes sont mobiles suivant un axe perpendiculaire au disque de manière à pincer celui-ci lors d'un freinage, ou à s'en écarter pour libérer le disque hors des périodes de freinage. Des guides sont prévus pour permettre le déplacement des plaquettes. Du fait du jeu nécessaire au coulissement des plaquettes dans ces guides, on observerait l'apparition de vibrations génératrices d'usure et de bruit si ces vibrations n'étaient empêchées par un moyen adéquat. Classiquement ce moyen est constitué par un organ élastique tel qu'un ressort, qui charge les plaquettes contre une face des guides, pour s'opposer à l'apparition de ces vibrations. On connaît de nombreuses configurations de ressorts propres à remplir cette fonction. En particulier FR-A-2 296 129 décrit un tel ressort en lame qui comprend une partie centrale fixée par pincement sur le support de la plaquette et deux bras dont les extrémités libres sont pressées par l'étrier du frein à disque contre des oreilles débordant du support de la plaquette, pour empêcher des vibrations de cette plaquette ou, au moins, pour réduire l'amplitude de celles-ci.

Classiquement l'étrier du frein est monté coulissant sur une chape solidaire du moyeu de la roue équipée du frein. Pour accélérer le montage et le démontage du frein, on souhaite pouvoir prémonter les plaquettes sur l'étrier de manière que ces plaquettes viennent directement en position de fonctionnement, lors du montage du frein, par simple mise en place de l'étrier préalablement garni de plaquettes. De même, au démontage, on souhaite pouvoir dégager rapidement les plaquettes du frein. Les plaquettes équipées du ressort décrit dans FR-A-2 296 129 ne se prêtent pas à un tel prémontage sur l'étrier.

Pour satisfaire à ces exigences, US-A-4,394,891 un frein à disque dont l'étrier est équipé d'un ressort en fil qui charges les plaquettes de frein pour s'opposer aux vibrations de ces plaquettes en période de freinage. En outre ce ressort en fil peut coopérer avec des dents formées sur les supports des plaquettes, pour transporter par pincement ces plaquettes, au montage ou au démontage. On déplace ainsi simultanément un ensemble formé de l'étrier, du ressort et des plaquettes.

On observe cependant que ce ressort en fil est de fabrication coûteuse car il présente de nombreux coudes orientés dans des plans différents. En outre le fil n'étant pas solidaire des plaquettes, celui-ci n'est pas automatiquement remplacé avec celles-ci, lorsqu'une usure extrême des garnitures des plaquettes est constatée. Le non-renouvellement du ressort lors d'un remplacement des plaquettes est considéré comme peu satisfaisant du point de vue de la sécurité de fonctionnement de ce ressort, qui peut se briser par fatigue excessive. Enfin, le démontage des plaquettes du frein décrit dans le document précité n'est pas très commode car il exige l'extraction préa- ble des deux colonnettes de support de l'étrier, pour permettre le dégagement de l'ensemble étrier/plaquettes des guides latéraux des plaquettes.

On connaît également, de FR-A-2 420 692, l'utilisation d'une pince élastique constituant un moyen d'accrochage du support de la garniture de friction extérieure à l'étrier coulissant et présentant les mêmes inconvénients à savoir qu'il comporte de nombreux coudes orientés dans les plans différents et qu'il ne peut pas être rendu solidaire des plaquettes puisqu'il n'y a qu'une seule pince de ce type sur le frein.

On connaît par ailleurs, grâce au document GB-A-2 147 376, un frein à disque dont la plaquette extérieure est rendue solidaire de l'étrier lui-même par un ressort allongé, tandis que la plaquette intérieure est rendue solidaire du piston d'étrier par un ressort s'insérant dans ce dernier.

Outre le fait qu'elle interdit de rendre interchangeables les plaquettes intérieure et extérieure, une telle disposition oblige à monter les plaquettes sur l'étrier alors que ce dernier est totalement séparé de la chape, comme décrit dans ce document page 2, lignes 10 à 30, puisque la plaquette intérieure ne peut être mise en place et extraite que par un mouvement suivant une direction axiale du piston, donc impossible à effectuer en face du disque ou à proximité.

Enfin, un frein du même type que le précédent est décrit dans le document antérieur DE-A-3 336 302.

La présente invention a pour but de réaliser une plaquette pourfrein à disque propre à faciliter le montage et le démontage du frein et des plaquettes, et qui ne présente pas les inconvénients exposés ci-dessus.

La présente invention a aussi pour but de réaliser un frein à disque conçu pour recevoir de telles plaquettes.

A cette fin la plaquette de frein de l'invention, destinée a un frein à disque présentant des surfaces d'appui pour cette plaquette et muni d'un étrier coulissant lui-même équipé d'un moteur de frein, cette plaquette comprenant une garniture de friction fixée sur un support, et un organe élastique monté sur ce support pour rattraper des jeux entre la plaquette et lesdites surfaces d'appui, et pour constituer un moyen d'accrochage de la plaquette sur l'étrier du frein à disque, ledit organe élastique étant fixé de manière inséparable à ladite plaquette pour former un seul ensemble de construction permettant le prémontage de la plaquette sur l'étrier et le montage consécutif de l'ensemble étrier-plaquettes, est essentiellement caractérisée en ce que ledit support de plaquette présente une symétrie plan et en ce que l'organe élastique prend la forme d'un ressort en lame à deux bras symétriques par rapport à un axe de montage du ressort sur le support, chaque bras suivant sensiblement, à partir de cet axe, un bord adjacent du support de plaquette pour s'appuyer sur celui-ci en amont du moyen d'accrochage formé à l'extrémité de ce bras.

L'invention propose aussi un frein à disque à étrier coulissant équipé de telles plaquettes, comprenant un organe de support solidaire du porte-fusée associé d'une roue de véhicule, l'étrier étant monté sur cet organe par l'intermédiaire d'au moins une colonnette autorisant le coulissement axial de l'étrier sur l'organe, caractérisé en ce que l'étrier présente au moins une surface de portée, conformée pour coopérer avec un moyen d'accrochage d'une plaquette de manière à retenir celle-ci en suspension sur l'étrier.

Au dessin annexé, donné seulement à titre d'exemple :
la figure 1 est une vue de face de la plaquette équippée du ressort suivant l'invention;
la figure 2 est une vue en élévation de la plaquette de la figure 1;
la figure 3 est une vue de face du frein à disque suivant l'invention équippé de plaquettes conformes à celle des figures 1 et 2 ; et

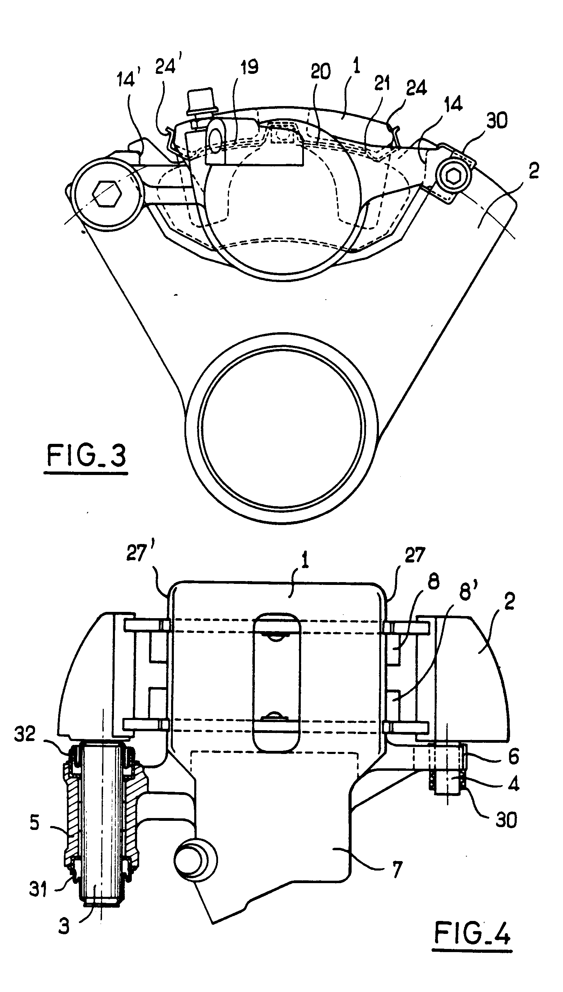

la figure 3 une vue en élévation du frein à disque de la figure 3.

On se référe aux figures 3 et 4 du dessin où l'on a représenté le frein à disque suivant l'invention. Celui-ci comprend classiquement un étrier 1 monté coulissant sur une pièce de support 2, par l'intermédiaire de deux colonnettes 3 et 4 qui passent dans des perçages des bras 5 et 6 de l'étrier, respectivement. L'étrier comporte encore un moteur de frein 7 actionné, par exemple hydrauliquement, pour presser des garnitures de friction 8, 8' contre deux faces opposées d'un disque (non représenté) solidaire du moyeu d'une roue d'un véhicule pour freiner ce dernier. Comme il est bien connu, l'étrier 1 peut coulisser sur les colonnettes 3,4 pourque le moteurde frein puisse agir par réaction sur la garniture 8 de manière que celle-ci vienne s'appliquer sur une face du disque quand l'autre garniture 8' est pressée par le moteur de frein contre ce disque.

Suivant une caractéristique du frein de la présente invention, la pièce de support 2 est formée d'une pièce avec le porte-fusée de la roue et l'étrier 1 peut ainsi être monté directement sur ce porte-fusée par vissage d'extrémités filetées des colonnettes 3, 4 dans des alésages filetés correspondants usinés dans la pièce de support. On conçoit que l'on peut ainsi accélérer le montage du frein suivant l'invention sur un véhicule, puisqu'on élimine le montage de la classique chape sur laquelle l'étrier est normalement monté par l'intermédiaire des colonnettes.

Suivant l'invention, on accélère encore ce montage en réalisant une plaquette de frein conçue de manière à être installée sur le porte-fusée en même temps que l'étrier, grâce à des moyens d'accrochage incorporés à un organe élastique monté sur cette plaquette pour rattraper des jeux entre celles-ci et des surfaces d'appui associées du frein, jeux qui seraient autrement générateurs de bruit et d'usure par les vibrations de la plaquette qu'ils autorisent en période de freinage.

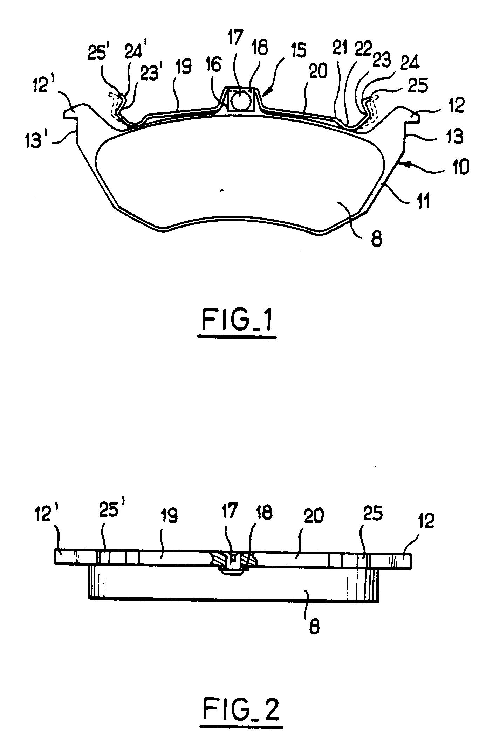

On se reporte aux figures 1 et 2 où l'on a représenté une telle plaquette 10, qui comprend une garniture de friction 8 fixée sur un support 11 découpé par exemple dans une tôle de faible épaisseur, comme il est bien connu dans l'industrie automobile.

Le support 11 présente une symétrie plan et il comprend deux oreilles 12, 12' et deux découpes en équerre 13, 13' conformées pour coopérer avec des surfaces d'appui complémentaires 14, 14' prévues sur la pièce de support 2 (voir figure 3) pour définir la position radiale de fonctionnement de la plaquette par rapport au disque.

Un organe élastique tel qu'un ressort en lame 15 est monté sur une oreille centrale 16 de la plaquette par l'intermédiaire d'un moyen de fixation tel qu'un rivet 17 traversant un trou percé dans cette oreille et un trou coaxial percé dans une patte 18 débordant du ressort 15 parallèlement au plan du support 11. Avantageusement pour les raison évoquées en préambule, l'organe élastique ne peut être séparé de la plaquette.

Le ressort 15 comprend deux bras symétriques 19, 20 (Fig.2), couvrant la largeur du support 11. Chaque bras présente plusieurs pliures d'axes parallèles 21, 22, 23, 24, par exemple, sur le bras 20. Du fait qu'elles sont parallèles, ces pliures sont de réalisation facile et peu coûteuse, à partir d'une lame de ressort plan. Entre le rivet 17 et la pliure 21, le bras 20 suit un profil rectiligne, pratiquement parallèle au bord adjacent du support de garniture 11.

A la pliure 21, le bras s'écarte légèrement de ce bord pour définir un appui sur lequel l'étrier du frein vient porter en position de fonctionnement (Fig.3) pour charger la plaquette contre les parties horizontales des surfaces d'appui 14, 14' et réaliser ainsi la fonction classique de rattrapage de jeu pour prévenir vibrations, bruit et usure.

Suivant une caractéristique essentielle du ressort de plaquette suivant la présente invention, les bras 19 et 20, symétriques, présentent des extrémités libres pliées suivant un profil en "V" (23, 24 ; 23', 24') terminées par une courte lèvre (25, 25') qui s'écarte de l'axe du rivet 17 du ressort. L'étrier 1 (Fig.3) présente de son côté, deux surfaces de portée telles que des bords 27, 27' (Fig.4) parallèles à l'axe du rivet, ces bords présentant des sections droites en "V" généralement complémentaires des profils en "V" (23, 24 ; 23', 24') des extrémités libres du ressort.

Au repos, les pliures 24,24' du ressort sont écartées d'une distance inférieure à celle qui sépare les bords 27, 27' de l'étrier. Ainsi, suivant l'invention, on peut monter une plaquette sur l'étrier par si mple pression de cette plaquette vers la face inférieure de l'étrier (du point de vue de la figure 3), de manière que les pliures 24, 24' s'écartent l'une de l'autre sous l'effet de cette pression (positions repérées en traits interrompus, Fig.3) jusqu'à dépasser les fonds des profils en 'V" des bords 27, 27', après quoi la plaquette est retenue sur l'étrier par pinçage des profils en "V" sensiblement complémentaires des bords 27, 27' de l'étrier, par les extrémités correspondantes du ressort. Deux plaquettes peuvent être ainsi montées sur un étrier.

L'ensemble étrier-plaquettes ainsi constitué peut alors être manipulé d'un bloc pour être monté sur le porte-fusée 2 par l'intermédiaire des colonnettes 3, 4. Pour ce faire on complète l'ensemble en prémon- tant les colonnettes dans les bras 5,6 de l'étrier (Fig.4) en prenant soin de ne pas faire déborder leurs extrémités filetées de ces bras. Divers moyens de retenue à friction peuvent être utilisés à cet effet, tel que par exemple un manchon 30 en matière plastique pour la colonnette 4 ou les gaines de protection souples classiques 31, 32 pour la colonnette 3.

L'ensemble étant mis en position sur le porte-fusée, les colonnettes 3,4 sont vissées surcelui-ci pour fixer l'étrier et les plaquettes par rapport au disque du frein, préalablement installé avec le moyeu de roue sur le porte-fusée.

Au démontage du frein, par exemple pour remplacer des plaquettes à garnitures usées par des plaquettes neuves, il suffit de démonter la colonnette 4, puis de basculer l'étrier autour de la colonnette 3 pour dégager les plaquettes à remplacer. On facilite cette opération en écartant légèrement l'extrémité 24' du bras de ressort 19 (Fig.3), du bord 27' de l'étrier. Compte-tenu des rayons de courbure en jeu, l'autre bord 27 de l'étrier se dégage sans difficulté de l'extrémité adjacente du ressort. On enlève enfin les plaquettes en les dégageant suivant une direction radiale de leurs surfaces d'appui 14, 14'.

Ainsi l'invention fournit une plaquette de frein munie d'un ressort de réalisation peu coûteux, qui sera en outre rebuté en même temps qu'une plaquette usée et qui autorise un montage et un démontage rapide de l'ensemble étrier-plaquettes. On observe à cet égard qu'un remplacement de plaquettes n'exige le retrait que d'une seule colonnette et non des deux colonnettes, comme c'est le cas avec les plaquettes et le frein à disque du brevet des Etats-Unis d'Amé- rique précité.

Bien entendu l'invention n'est pas limitée au mode de réalisation décrit et représenté, qui ne l'a été qu'à titre d'exemple. En particulier, l'invention s'étend à toute plaquette de frein équipée de moyens propres à assurer un accrochage élastique de cette plaquette sur un étrier de frein à disque, les fonctions "anti-vibration" et "accrochage" de l'organe élastique pourraient être découplées.

## Revendications

1. Plaquette de frein pour un frein à disque présentant des surfaces d'appui pour cette plaquette et muni d'un étrier coulissant lui-même équipé d'un moteur de frein (7), cette plaquette comprenant une garniture de friction (8) fixée sur un support (11), et un organe élastique (15) monté sur ce support (11) pour rattraper des jeux entre la plaquette (10) et lesdites surfaces d'appui, et pour constituer un moyen d'accrochage (23, 24, 25) de la plaquette sur l'étrier du frein à disque, ledit organe élastique (15) étant fixé de manière inséparable à ladite plaquette (10) pour former un seul ensemble de construction permettant le prémontage de la plaquette sur l'étrier et le montage consécutif de l'ensemble étrier-plaquettes, cactérisée en ce que ledit support de plaquette présente une symétrie plan et en ce que l'organe prend la forme d'un ressort en lame à deux bras symétriques (19,20) par rapport à un axe de montage du ressort sur le support (11), chaque bras suivant sensiblement, à partir de cet axe, un bord adjacent du support de plaquette pour s'appuyer sur celui-ci en amont du moyen d'accrochage formé à l'extrémité de ce bras.

2. Plaquette conforme à la revendication 1, caractérisée en ce que ledit ressort en lame présente une extrémité libre pliée en "V" (23, 24 ; 23', 24') suivant un profil sensiblement complémentaire du profil d'une surface de portée adjacente de l'étrier du frein à disque qui reçoit la plaquette, cette extrémité formant ledit moyen d'accrochage.

3. Plaquette conforme à la revendication 2, caractérisée en ce qu'une lèvre (25, 25') est formée à chacune des extrémités libres des bras du ressort, ces lèvres étant écartées au repos d'une distance inférieure à celle des surfaces de portée adjacentes associées de l'étrier qui reçoit la plaquette.

4. Plaquette conforme à l'une quelconque des revendications précédentes, caractérisée en ce que l'organe élastique (15) est fixé de manière inséparable sur le support de garniture par un moyen de fixation traversant des trous coaxiaux percés respectivement dans une oreille (16) du support de garniture et dans une patte (18) adjacente à celle-ci et qui déborde de cet organe.

5. Plaquette conforme à l'une quelconque des revendications précédentes, caractérisée en ce que l'organe élastique prend la forme d'une lame de largeur égale à l'épaisseur du support de garniture et se superpose à cette épaisseur.

6. Frein à disque à étrier coulissant, équipé de plaquettes conformes à l'une quelconque des revendications 1 à 5, comprenant un organe de support solidaire du porte-fusée associé d'une roue de véhicule, l'étrier étant monté sur cet organe par l'intermédiaire d'au moins une colonnette autorisant le coulissement axial de l'étrier sur l'organe, caractérisé en ce que l'étrier présente au moins une surface de portée (27, 27') conformée pour coopérer avec un moyen d'accrochage d'une plaquette de manière à retenir celle-ci en suspension sur l'étrier.

7. Frein à disque conforme à la revendication 6, caractérisé en ce que l'étrier comprend deux surfaces de portée (27, 27') conçues pour coopérer chacune avec un moyen d'accrochage formé sur l'organe élastique d'une plaquette.

8. Frein à disque conforme à la revendication 7, caractérisé en ce que chacune desdites surfaces de portée présente un profil transversal en 'V", complémentaire de celui du moyen d'accrochage associé de l'organe élastique d'une plaquette, ces surfaces étant agencées de manière à permettre la fixation d'une paire de plaquettes sur l'étrier par pinçage desdites surfaces de portée par les moyens d'accrochage des plaquettes, dans des positions prédéterminées qui correspondent aux positions du travail de ces plaquettes, de part et d'autre du disque du frein.

9. Frein à disque conforme à l'une quelconque des revendications 6 à 8 caractérisé en ce qu'au moins un desdits moyens d'accrochage d'une plaquette est agencé de manière à pouvoir être décroché de l'extérieur du frein, pour autoriser le dégagement d'un accès aux plaquettes par simple rotation de l'étrier autour d'une colonnette.

10. Frein à disque conforme à l'une quelconque des revendications 6 à 9, caractérisé en ce que l'organe de support du frein est formé d'une pièce avec le porte-fusée de la roue associée.

## Patentansprüche

1. Bremsbelag für eine Scheibenbremse, die Auflageflächen für diesen Bremsbelag aufweist und mit einem Gleitsattel versehen ist, der wiederum mit einer Bremsbetätigungsvorrichtung (7) versehen ist, wobei dieser Bremsbelag einen auf einem Träger (11) befesügen Reibbelag (8) und ein elastisches Bauteil (15) enthält, das auf diesem Träger (11) angebracht ist, um das Spiel zwischen dem Bremsbelag (10) und den Auflageflächen zu beseitigen und um ein Anhängemittel (23, 24, 25) des Bremsbelages am Scheibenbremssattel zu bilden, wobei das elastische Bauteil (15) unabnehmbar an dem Bremsbelag (10) befestigt ist, um eine einzige Konstruktionseinheit zu bilden, die die Vormontage des Bremsbelages am Sattel und die nachfolgende Montage der Einheit aus Sattel und Belägen ermöglicht, dadurch gekennzeichnet, daß der Bremsbelagträger eine ebene Symmetrie aufweist und daß das elastische Bauteil die Form einer Blattfeder mit zwei zu einer Linie der Befestigung der Feder am Träger (11) symmetrischen Armen (19, 20) besitzt, wobei jeder Arm ausgehend von dieser Achse einem benachbarten Rand des Bremsbelagträgers im wesentlichen folgt, um sich an diesen vor dem am Ende dieses Armes gebildeten Anhängemittels anzulegen.

2. Bremsbelag gemäß Anspruch 1, dadurch gekennzeichnet, daß die Blattfeder ein zu einem "V" umgebogenes freies Ende (23, 24; 23', 24') besitzt, dessen Profil im wesentlichen zu dem Profil einer benachbarten Abstützfläche des den Bremsbelag aufnehmenden Scheibenbremssattels komplementär ist, wobei dieses Ende das Anhängemittel bildet.

3. Bremsbelag gemäß Anspruch 2, dadurch gekennzeichnet, daß an jedem derfreien Endender Feder eine Lippe (25, 25') gebildet ist, wobei diese Lippen in der Ruhestellung einen Abstand voneinander aufweisen, der kleiner als der Abstand der zugeordneten benachbarten Abstützflächen des Bremssattels ist, der den Bremsbelag aufnimmt.

4. Bremsbelag gemäß einem der vorangehenden Ansprüche, dadurch gekennzeichnet, daß das elastische Bauteil (15) unabnehmbar mit dem Reibbelagträger durch ein Befestigungsmittel verbunden ist, welches koaxiale Löcher durchsetzt, die durch einen Ansatz (16) des Reibbelagträgers bzw. durch eine Krempe (18) gebohrt sind, die zu diesem benachbart ist und über dieses Bauteil übersteht.

5. Bremsbelag gemäß einem der vorangehenden Änsprüche, dadurch gekennzeichnet, daß das elastische Bauteil die Form eines Streifens besitzt, dessen Breite gleich der Dicke des Reibbelagträgers ist und der diese Dicke abdeckt.

6. Gleitsattelscheibenbremse mit Bremsbelägen gemäß einem der Ansprüche 1 bis 5, mit einem Trägerbauteil, das fest mit einem Achsschenkel verbunden ist, der einem Fahrzeugrad zugeordnet ist. wobei der Sattel an diesem Bauteil mittels wenigstens einer Säule angebracht ist, die das axiale Gleiten des Sattels auf dem Bauteil ermöglicht, dadurch gekennzeichnet, daß der Sattel wenigstens eine Abstützfläche (27, 27') aufweist, die so gestaltet ist, daß sie mit einem Anhängemittel eines Bremsbelages so zusammenwirkt, daß sie diesen am Sattel aufgehängt festhält.

7. Scheibenbremse gemäß Anspruch 6. dadurch gekennzeichnet, daß der Sattel zwei Abstützflächen (27, 27') umfaßt. die dazu vorgesehen sind, jeweils mit einem an dem elastischen Bauteil eines Bremsbelages ausgebildeten Anhängemittel zusammenzuwirken.

8. Scheibenbremse gemäß Anspruch 7. dadurch gekennzeichnet, daß jede der Abstützflächen ein transversales Profil in Form eines "V" besitzt, das komplementär zu demjenigen des zugeordneten Anhängemittels des elastischen Bauteils eines Bremsbelages ist, wobei diese Flächen so angeordnet sind, daß sie die Befestigung eines Paares von Bremsbelägen am Sattel durch ein Einklemmen der Abstützflächen durch die Anhängemittel der Bremsbeläge in vorbestimmten Stellungen ermöglichen, die den Arbeitsstellungen dieser Beläge zu beiden Seiten der Bremsscheibe entsprechen.

9. Scheibenbremse gemäß einem der Ansprüche 6 bis 8, dadurch gekennzeichnet, daß wenigstens eines der Anhängemittel eines Bremsbelages so angeordnet ist, daß es von der Außenseite der Bremse her ausgehängt werden kann, um das Freigeben eines Zugangs zu den Belägen durch ein einfaches Drehen des Sattels um eine Säule zu ermöglichen.

10. Scheibenbremse gemäß einem der Ansprüche 6 bis 9, dadurch gekennzeichnet, daß das Trägerbauteil der Bremse in einem Stück mit dem Achsschenkel des zugeordneten Rades ausgebildet ist.

## Claims

1. Brake pad for a disc brake, having bearing surfaces for this pad and provided with a sliding caliper, itself equipped with a brake motor (7), this pad comprising a friction lining (8) fastened to a support (11), and an elastic member(15) mounted on this support (11) in order to compensate play between the pad (10) and the said bearing surfaces and to constitute a means of attaching (23, 24, 25) the pad to the caliper of the disc brake, the said elastic member (15) being fastened inseparably to the said pad (10) to form a single constructional assembly allowing the premounting of the pad on the caliper and the subsequent mounting of the caliper/pad assembly, characterized in that the said pad support has a plane of symmetry, and in that the elastic member takes the form of a leaf spring with two arms (19, 20) symmetrical relative to an assembly axis for the spring on the support (11), and each arm, starting from this axis, substantially follows an adjacent edge of the pad support and then bears on the latter upstream of the attachment means formed at the end of this arm.

2. Pad according to Claim 1, characterized in that the said leaf spring has a free end folded in the form of a V (23,24; 23', 24') according to a profi le substantially matching the profile of an adjacent bearing surface of the caliper of the disc brake receiving the pad, this end forming the said atach- ment means.

3. Pad according to Claim 2, characterized in that a lip (25, 25') is formed at each of the free ends of the arms of the spring, and at rest these lips are set apart from one another a distance less than that of the associated adjacent bearing surfaces of the caliper receiving the pad.

4. Pad according to any of the preceding claims, characterized in that the elastic member (15) is fastened inseparably to the lining support by a fastening means passing through coaxial holes made respectively in a lug (16) of the lining support and in a tongue (18) adjacent to this and projecting from this member.

5. Pad according to any of the preceding claims, characterized in that the elastic member takes the form of a leaf of a width equal to the thickness of the lining support and is superposed on this thickness.

6. Disc brake with a sliding caliper, equipped with pads according to any of Claims 1 to 5, comprising a supporting member fixed to the associated stub axle of a vehicle wheel, the caliper being mounted on this member by means of at least one column allowing the caliper to slide axially on the member, characterized in that the caliper has at least one bearing surface (27, 27') shaped so as to interact with a means of attachment of a pad, so as to keep the latter suspended on the caliper.

7. Disc brake according to Claim 6, characterized in that the caliper has two bearing surfaces (27, 27') each designed to interact with an attachment means formed on the elastic member of a pad.

8. Disc brake according to Claim 7, characterized in that each of the said bearing surfaces has a V-shaped transverse profile matching that of the associated attachment means of the elastic member of a pad, these surfaces being designed to make it possible to fasten a pair of pads to the caliper, because the said bearing surfaces are gripped by the means of attaching the pads, on either side of the brake disc in predetermined positions corresponding to the working positions of these pads.

9. Disc brake according to any of Claims 6 to 8, characterized in that at least one of the said means of attachment of a pad is designed so that it can be detached from outside the brake, to make it possible to gain access to the pads simply by rotating the caliper about a column.

10. Disc brake according to any of Claims 6 to 9, characterized in that the supporting member of the brake is formed integrally with the stub axle of the associated wheel.
